# EUROPEAN PATENT SPECIFICATION

(11) **EP 3 696 581 B1**
(45) Date of publication and mention of the grant of the patent: **17.05.2023**
(21) Application number: 18866212.6
(22) Date of filing: 04.10.2018
(51) Int. Cl.: G02B 5/124, B32B 3/24, B32B 7/02, B32B 37/10, G02B 5/128

(54) **RETROFLECTION SHEET AND PRODUCTION METHOD FOR RETROFLECTION SHEET**
RÜCKSTRAHLFOLIE UND VERFAHREN ZUR HERSTELLUNG VON RÜCKSTRAHLFOLIE
FEUILLE RÉTRORÉFLÉCHISSANTE ET PROCÉDÉ DE FABRICATION DE FEUILLE RÉTRORÉFLÉCHISSANTE

(30) Priority: 12.10.2017 JP 2017198717
(43) Date of publication of application: 19.08.2020
(73) Proprietor: Nippon Carbide Industries Co., Inc., Tokyo 108-8466 (JP)
(72) Inventor: SHIOMI, Toshiaki, Namerikawa-shi, Toyama 936-8555 (JP); JIANG, Chenyang, Namerikawa-shi, Toyama 936-8555 (JP)
(74) Representative: Hoffmann Eitle
(86) International application number: PCT/JP2018/037144
(87) International publication number: WO 2019/073889

(56) References cited:
- WO-A1-02/43952
- WO-A1-2007/010945
- WO-A1-2011/147079
- WO-A1-2012/029921
- WO-A1-2017/188243
- JP-A- H06 347 621
- US-A1- 2011 013 282

## Description

### Technical Field

The present invention relates to a retroreflective sheet and a method for manufacturing a retroreflective sheet.

### Background Art

The retroreflective sheet has a property of allowing light incident thereon to be reflected toward a light source. Due to such a property, the retroreflective sheet is used for a purpose such as raising visibility of a target object (such as a printed object) irradiated with light during nighttime or in a dark place. The retroreflective sheet is used for, for example, traffic signs, guide signs, vehicle license plates, advertisement signs, traffic lane separators, delineators, and the like.

An example of such a retroreflective sheet is disclosed in Patent Literature 1 described below. The retroreflective sheet includes: a light transmissive layer including retroreflective elements; and a resin back layer provided with multiple dents smaller than the retroreflective elements, on a surface facing a surface of the light transmissive layer on which the retroreflective elements are formed. In this retroreflective sheet, low refractive index gas is confined in voids formed between the dents formed in the resin back layer and the retroreflective elements. With a refractive index difference between the low refractive index gas and the retroreflective elements, light being incident from the light transmissive layer and having reached the interface between the retroreflective elements and the voids, can be reflected toward the light transmissive layer.
[Patent Literature 1] Japanese Patent No. 3123693
WO 02/43952 A1, US 2011/013282 A1, WO 2011/147079 A1, and WO 2012/029921 A1 are further prior art.

### Summary of Invention

A retroreflective sheet described in Patent Literature 1 described above has no metal vapor-deposited film used therein, and thus can have improved brightness. The retroreflective sheet having excellent brightness can be used for a printed object, such as a vehicle license plate, to enable a printed part to stand out. However, in the retroreflective sheet disclosed in Patent Literature 1 described above, the voids formed between the retroreflective elements and the dents might be crushed due to application of pressure in a thickness direction as a result of bending or embossing. When the voids are thus crushed, the retroreflectivity decreases. Therefore, the retroreflective sheet disclosed in Patent Literature 1 described above might have the retroreflectivity compromised when it is used for a printed object bent or embossed, compared with a case where it is used for a flat object.

In view of this, an object of the present invention is to provide a retroreflective sheet in which a decrease in the retroreflectivity is less likely to be compromised even when the pressure in the thickness direction is applied, and a method of manufacturing the retroreflective sheet.
The invention is defined by the independent claims.

In order to solve the above problems, a retroreflective sheet according to the present invention includes: a retroreflective layer including a plurality of retroreflective elements on one surface; a back face layer provided to face the retroreflective elements and having a surface on a retroreflective elements side at least a part of which is made of resin; a plurality of particles disposed between the retroreflective elements and the back face layer and having a surface at least a part of which is made of resin; and voids formed between the retroreflective elements and the back face layer.

In the above-described retroreflective sheet, the plurality of particles is fixed by being sandwiched by the retroreflective elements and the back face layer. Furthermore, the voids are formed between the back face layer and the retroreflective elements, and a gas such as air is confined in the voids. Due to the refractive index difference between this gas and the retroreflective elements, the light incident from the retroreflective layer side can be reflected to the retroreflective layer side at an interface between the retroreflective elements and the voids. Furthermore, in the above-described retroreflective sheet, the voids are supported by the plurality of particles and thus can be prevented from being crushed even when pressure in the thickness direction is applied. Therefore, in the above-described retroreflective sheet, a decrease in retroreflectivity can be suppressed even when pressure is applied in the thickness direction.

Furthermore, in the above-described retroreflective sheet, at least a part of the surface of the back face layer on the retroreflective elements side is made of resin, and at least a part of the surface of the plurality of particles is also made of resin. Thus, the back face layer and the plurality of particles can be firmly bonded to each other. Thus, the positions of the plurality of particles can be prevented from being displaced.

Furthermore, the retroreflective elements and the back face layer are preferably bonded to each other via at least some of the plurality of particles.

With the retroreflective elements and the back face layer thus bonded to each other via the plurality of particles, the retroreflective elements and the back face layer can be firmly bonded to each other.

The particles are preferably made of resin.

With the particles made of resin, the back face layer and the particles can be more firmly bonded to each other. Furthermore, with the retroreflective elements and the back face layer bonded to each other via the particles, the retroreflective elements and the back face layer can be firmly bonded to each other.

The particles are preferably made of thermosetting resin.

The particles made of thermosetting resin are less likely to deform when the retroreflective sheet is heated. For example, the retroreflective sheet that is used for a car license plate may be heated to a high temperature by receiving heat reflected from asphalt or the like. Even in such a case, the deformation of the particles can be less likely to occur.

Furthermore, a bonding portion where the retroreflective elements and the back face layer are bonded to each other is preferably provided, the bonding portion is continuously formed to surround a plurality of capsule portions in plan view, and the voids are formed in the plurality of capsule portions.

The bonding portion, where the retroreflective elements and the back face layer are bonded to each other, continuously formed to surround the plurality of capsule portions supports the voids when the pressure in the thickness direction is applied, whereby the voids in the plurality of capsule portions can be less likely to be crushed. Furthermore, in the above-described retroreflective sheet, the bonding portion where the retroreflective elements and the back face layer are bonded to each other is continuously formed to surround the plurality of capsule portions, and thus can prevent water or foreign matter from entering the plurality of capsule portions when the retroreflective sheet is used in an environment (such as outdoors) exposed to water or foreign matter. Thus, in the capsule portions, the voids formed between the retroreflective elements and the plurality of particles can be prevented from being filled with water or foreign matter. For this reason, the above-described retroreflective sheet can have improved reliability when used in an environment (such as outdoors) exposed to water or foreign matter.

Furthermore, binder portions made of a same material as the particles are preferably formed between the back face layer and the retroreflective elements in the bonding portion.

The plurality of particles is interposed between the back face layer and the retroreflective elements and thus the plurality of particles may melt to serve as the binder portions, when the back face layer and the retroreflective layer are thermocompression-bonded to each other. Thus, with the binder portions, made of the plurality of particles, formed between the back face layer and the retroreflective elements in the bonding portion, increased bonding strength between the retroreflective elements and the back face layer can be achieved.

Furthermore, in the plurality of capsule portions, a part of the back face layer and a part of the retroreflective elements are preferably bonded to each other.

In plan view, the portions where the retroreflective elements are bonded to the back face layer appear to be brighter than the portions where the retroreflective elements come into contact with the voids. Therefore, the bonding portion looks brighter than the capsule portions where the voids are formed. In view of this, the back face layer and the retroreflective elements are partially bonded to each other also in the capsule portions as described above, whereby the brightness difference between the bonding portion and the capsule portions may be reduced. Thus, the uniformity of the appearance of the retroreflective sheet can be improved. Furthermore, the bonding strength between the retroreflective elements and the back face layer can be increased by increasing bonding portions between the back face layer and the retroreflective elements.

The refractive index of the particles is preferably smaller than the refractive index of the retroreflective elements.

When the refractive index of the particles is smaller than the refractive index of the retroreflective elements, reflection of the light incident from the retroreflective elements side toward the retroreflective elements in the interface between the retroreflective elements and the particles is facilitated at the portions where the retroreflective elements and the particles are in contact with each other. Thus, the retroreflectivity of the retroreflective sheet can be further improved.

In order to solve the above problems, a method for manufacturing a retroreflective sheet according to the present invention includes: a stacking process of stacking a retroreflective layer including a plurality of retroreflective elements on one surface and a back face layer provided to face the retroreflective elements and having a surface on a retroreflective elements side at least a part of which is made of resin with a plurality of particles having a surface at least a part of which is made of resin interposed therebetween; and a pressure bonding process of thermocompression-bonding the retroreflective layer and the back face layer so that voids are formed between the retroreflective elements and the back face layer.

With the above-described method for manufacturing the retroreflective sheet, the retroreflective sheet is manufactured with the plurality of particles sandwiched by the retroreflective elements and the back face layer, and the voids formed between the back face layer and the retroreflective elements. Thus, the retroreflective sheet is manufactured in which a decrease in the retroreflectivity can be less likely to be compromised even when pressure is applied in the thickness direction as described above. Furthermore, at least a part of the surface of the back face layer on the retroreflective elements side is made of resin, and at least a part of the surface of the plurality of particles is also made of resin. Thus, the back face layer and the plurality of particles can be firmly bonded to each other in the pressure bonding process. Thus, the positions of the plurality of particles can be prevented from being displaced.

Furthermore, in the pressure bonding process, the retroreflective elements and the back face layer are preferably bonded to each other via at least some of the plurality of particles.

With the retroreflective elements and the back face layer thus bonded to each other via the plurality of particles, the retroreflective elements and the back face layer can be firmly bonded to each other.

Moreover, in the above-described method for manufacturing the retroreflective sheet, the particles are preferably entirely made of resin.

With the particles entirely made of resin, the back face layer and the particles can be more firmly bonded to each other in the pressure bonding process. Furthermore, with the retroreflective elements and the back face layer bonded to each other via the particles, the retroreflective elements and the back face layer can be firmly bonded to each other.

Moreover, in the above-described method for manufacturing the retroreflective sheet, the particles are preferably made of thermosetting resin.

When the particles are made of thermosetting resin, the particles heated in the pressure bonding process are cured, whereby the particles can have increased strength. Therefore, the retroreflective sheet manufactured by the above-described method for manufacturing the retroreflective sheet can further prevent the voids from being crushed even when pressure is applied in the thickness direction, and a decrease in the retroreflectivity can be less likely to be compromised.

Furthermore, in the pressure bonding process, a bonding portion where the retroreflective elements and the back face layer are bonded to each other is preferably formed, the bonding portion is continuously formed to surround a plurality of capsule portions in plan view, and the voids are formed in the plurality of capsule portions.

Thus, by forming the bonding portion and the capsule portions in the pressure bonding process, as described above, a retroreflective sheet that can prevent the voids from being crushed in the plurality of capsule portions is manufactured. The above-described retroreflective sheet can have improved reliability when used in an environment (such as outdoors) exposed to water or foreign matter as described above.

Furthermore, in the pressure bonding process, binder portions made of the particles are preferably formed between the back face layer and the retroreflective elements.

The thermocompression bonding performed with the particles interposed between the back face layer and the retroreflective elements results in melting of the particles and thus forming of the binder portions made of the particles between the back face layer and the retroreflective layer. Thus, with the binder portions formed between the back face layer and the retroreflective elements in the bonding portion, increased bonding strength between the retroreflective elements and the back face layer can be achieved.

Furthermore, in the pressure bonding process, a part of the back face layer in the plurality of capsule portions and a part of the retroreflective elements are preferably bonded to each other.

As described above, by bonding a part of the back face layer and a part of the retroreflective elements to each other in the plurality of capsule portions, a retroreflective sheet is manufactured in which the brightness difference between the bonding portion and the capsule portions can be reduced as described above and the bonding strength between the retroreflective elements and the back face layer can be increased.

As described above, according to the present invention, a retroreflective sheet in which a decrease in the retroreflectivity is less likely to be compromised even when the pressure in the thickness direction is applied, and a method of manufacturing the retroreflective sheet are provided.

### Brief Description of Drawings

FIG. 1 is a schematic plan view illustrating a part of a retroreflective sheet according to an embodiment of the present invention.
FIG. 2 is a schematic cross sectional view of the retroreflective sheet illustrated in FIG. 1 in a thickness direction, taken along line II-II.
FIG. 3 is an enlarged view of the part of the retroreflective sheet illustrated in FIG. 2.
FIG. 4 is a flowchart illustrating a method for manufacturing the retroreflective sheet according to the embodiment of the present invention.
FIG. 5 is a cross-sectional view of a retroreflective sheet according to a modification of the present invention as viewed in a direction that is same as that for FIG. 2.
FIG. 6 is a cross-sectional view of a retroreflective sheet according to another modification of the present invention as viewed in a direction that is same as that for FIG. 2.

### Description of Embodiments

Hereinafter, a preferred embodiment of a retroreflective sheet according to the present invention will be described in detail with reference to the drawings.

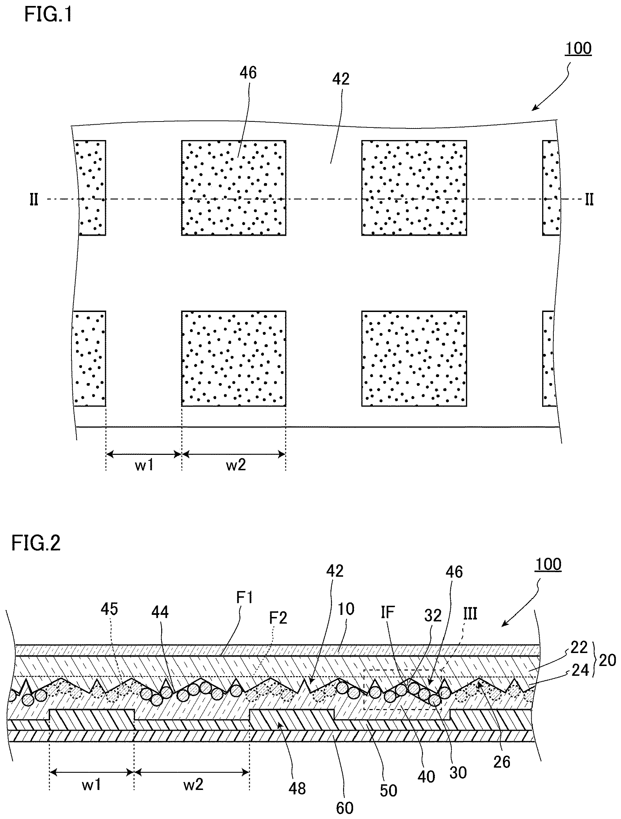

FIG. 1 is a schematic plan view illustrating a retroreflective sheet according to an embodiment. FIG. 2 is a schematic cross sectional view of the retroreflective sheet illustrated in FIG. 1 in a thickness direction, taken along line II-II. In each of FIGS. 1 and 2 and other drawings referred to in the following description, the size of each component is illustrated in an exaggerated manner or the like, and thus is not accurately illustrated for the sake of easy understanding. Furthermore, in each of FIGS. 1 and 2 and other drawings referred to in the following description, the same reference numerals are given to components having the same configuration, and repeated reference numerals are omitted.

As illustrated in FIG. 2, the retroreflective sheet 100 according to the present embodiment includes a surface protective layer 10, a retroreflective layer 20, a plurality of particles 30, a back face layer 40, an adhesive layer 50, and a release layer 60. Hereinafter, these components included in the retroreflective sheet 100 will be described in more detail.

The surface protective layer 10 is a layer that protects a surface F1 of the retroreflective layer 20 disposed on a viewer side when the retroreflective sheet 100 is used, and is the layer on the outermost side of the retroreflective sheet 100 when the retroreflective sheet 100 is used. For the sake of providing the retroreflective sheet 100 with excellent retroreflectivity, the surface protective layer 10 is preferably a transparent resin layer. The total light transmittance of the surface protective layer 10 is, for example, 80% or more. Examples of the material forming the surface protective layer 10 include acrylic resin, alkyd resin, fluorine resin, vinyl chloride resin, polyester resin, urethane resin, and polycarbonate resin. One of these types of resin may be used alone, or a plurality of these types may be used in combination. For the sake of providing the surface protective layer 10 with weatherability and workability, acrylic resin, polyester resin, and vinyl chloride resin are preferably used. Furthermore, acrylic resin is preferably used for the sake of coating ability, dispersibility of a colorant when coloring, and the like. Note that various additives may be added to the surface protective layer 10 without largely compromising the transparency. The additives include an ultraviolet absorber, a light stabilizer, a heat stabilizer, a plasticizer, a crosslinking agent, an antioxidant, an antifungal agent, a colorant, and the like.

The retroreflective layer 20 includes a plate-shaped holding body portion 22 and a plurality of retroreflective elements 24. A first surface F1 of the holding body portion 22 is covered with the surface protective layer 10, and a second surface F2 of the holding body portion 22 is provided with a plurality of retroreflective elements 24. The plurality of retroreflective elements 24 is not particularly limited as long as they have a reflective surface suitable for retroreflecting incident light. For example, preferably, the retroreflective elements 24 with a polyhedral shape such as a triangular pyramid or what is known as a cube corner shape are arranged in a close-packed manner, so that excellent retroreflectivity can be achieved.

For the sake of providing the retroreflective sheet 100 with excellent retroreflectivity, the retroreflective layer 20 is preferably a transparent resin layer. Examples of the material forming the retroreflective layer 20 include acrylic resin, urethane resin, fluorine resin, polyester resin, vinyl chloride resin, polycarbonate resin, polyarylate resin, silicone resin, polyolefin resin, and ionomer resin. One of these types of resin may be used alone, or a plurality of these types may be used in combination. Furthermore, for the sake of improving the transparency and weatherability of the retroreflective layer 20, the retroreflective layer 20 is preferably made of acrylic resin, urethane resin, fluorine resin, polycarbonate resin, or the like. Note that various additives may be added to the retroreflective layer 20 without largely compromising the transparency. The additives include an ultraviolet absorber, a light stabilizer, a heat stabilizer, a plasticizer, a crosslinking agent, an antioxidant, an antifungal agent, a colorant, and the like.

The back face layer 40 is provided to face the surface of the retroreflective layer 20 provided with the retroreflective elements 24, and has at least a part of the surface on the side of the retroreflective elements 24 being a layer made of resin. Preferably, the back face layer 40 is preferably entirely made of resin. Furthermore, the back face layer 40 according to the present embodiment has a bonding portion 42 that adheres to the retroreflective elements 24. As illustrated in FIG. 1, the bonding portion 42 is continuously formed to surround a plurality of capsule portions 46 in plan view. Furthermore, in the retroreflective sheet 100 according to the present embodiment, as illustrated in FIG. 2, the plurality of capsule portions 46 is provided with partial bonding portions 44 where a part of the back face layer 40 and a part of the retroreflective elements 24 are bonded to each other. In plan view, the bonding portion 42 has a predetermined width and is continuously formed so as to surround the capsule portions 46, whereas the partial bonding portions 44 are intermittently formed.

In plan view, the bonding portion 42 preferably has a width w1 that is 1000 um or less. A ratio w1/w2 of the width w1 of the bonding portion 42 to a width w2 of the capsule portion 46 is preferably 0.7 or more and 1.4 or less. The brightness difference between the bonding portion 42 and the capsule portion 46 can be reduced by reducing the width w1 of the bonding portion 42. The brightness difference between the bonding portion 42 and the capsule portion 46 can further be reduced by reducing a difference between the width w1 of the bonding portion 42 and the width w2 of the capsule portion 46 surrounded by the bonding portion 42 to a certain level.

Furthermore, a surface of the back face layer 40 according to the present embodiment opposite to the side of the retroreflective layer 20 is provided with recesses 48 that are recessed toward the retroreflective layer 20 and are positioned to overlap with the bonding portion 42 in the thickness direction of the retroreflective sheet 100. The recesses 48 are portions formed when the back face layer 40 is pressed in a process of manufacturing the retroreflective sheet 100 as described later.

Examples of the material forming such a back face layer 40 include acrylic resin, urethane resin, fluorine resin, polyester resin, vinyl chloride resin, polycarbonate resin, polyarylate resin, silicone resin, polyolefin resin, and ionomer resin. One of these types of resin may be used alone, or a plurality of these types may be used in combination. Furthermore, for the sake of improving the transparency and weatherability of the back face layer 40, the back face layer 40 is preferably made of acrylic resin, urethane resin, fluorine resin, polycarbonate resin, or the like. Note that various additives may be added to the back face layer 40. The additives include an ultraviolet absorber, a light stabilizer, a heat stabilizer, a plasticizer, a crosslinking agent, an antioxidant, an antifungal agent, a colorant, and the like.

The brightness and saturation of the retroreflective sheet 100 can be easily improved by providing a certain pigment in the back face layer 40. For example, the brightness of the retroreflective sheet 100 can be improved by providing a white pigment such as titanium oxide in the back face layer 40.

Furthermore, the back face layer 40 may contain a colorant other than the white pigment such as titanium oxide described above. Examples of such a colorant to be used may include inorganic pigments, organic pigments, organic dyes, and pearl pigments. In the back face layer 40, one of these colorants may be used alone, or two or more of these may be used in combination.

Examples of the inorganic pigments described above other than titanium oxide include calcium carbonate, barium sulfate, zinc oxide, zinc sulfide, carbon black, cadmium red, molybdenum red, ultramarine, cobalt blue, red iron oxide, chromium oxide, iron black, cadmium yellow, titanium yellow, nickel titanium yellow, chrome titanium yellow, yellow lead, yellow iron oxide, chrome orange, cadmium orange, gold powder, silver powder, copper powder, aluminum powder, and bronze powder. Examples of the organic pigments and the organic dyes include anthraquinone, phthalocyanine, quinacridone, isoindolinone, dioxazine, quinophthalone, quinoimine, perylene, perinone, azo, quinoline, methine, indigo, and naphtholimide organic compounds. Examples of the pearl pigments include titanium oxide-coated mica, bismuth oxide chloride, fish scales, and basic lead carbonate.

Conventionally, a retroreflective sheet has been colored by adding a colorant to the retroreflective layer, or by providing a printed or colored layer on a light incident side surface of the retroreflective layer. Retroreflectivity of such a conventional retroreflective sheet could have deteriorated because the colorant or the printed layer scatters light or inhibits incidence of light onto the retroreflective layer to inhibit reflection of light on the retroreflective layer. Colorants with dark colors (such as red, blue, and green) are especially likely to involve such a negative effect. On the other hand, for example, the retroreflective sheet 100 according to the present embodiment has the transparent retroreflective layer 20, and involves fewer factors hindering the incidence and reflection of light on the retroreflective layer 20 in a case where the colorant is added to the back face layer 40 as described above compared with the conventional configuration, whereby a decrease in the retroreflectivity is less likely to be compromised.

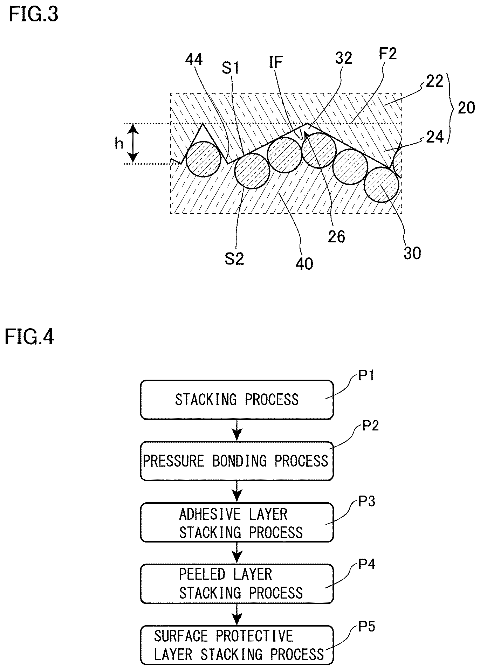

The plurality of particles 30 has surfaces at least partially made of resin, and are disposed between the retroreflective elements 24 and the back face layer 40 while being in contact with the retroreflective elements 24 and the back face layer 40 as illustrated in FIG. 2. As will be described later, at least some of the particles 30 according to the present embodiment melt in the bonding portion 42 during a manufacturing process for the retroreflective sheet 100, to be binder portions 45. Thus, the binder portions 45 are disposed between the back face layer 40 and the retroreflective elements 24 in the bonding portion 42, and are made of the same material as the particles 30. FIG. 3 is an enlarged view of a portion III surrounded by the broken line (a part of the capsule portions 46) of the retroreflective sheet illustrated in FIG. 2. In the capsule portions 46, the plurality of particles 30 is arranged between the retroreflective elements 24 and the back face layer 40. Thus, the plurality of particles 30 is sandwiched by the retroreflective elements 24 and the back face layer 40 to have their positions fixed. With the plurality of particles 30 thus sandwiched by the retroreflective elements 24 and the back face layer 40, voids 32 are formed between the back face layer 40 and the retroreflective elements 24. In addition, at least some of the plurality of particles 30 according to the present embodiment have surfaces with a first part S1 bonded to the retroreflective elements 24 and a second part S2 bonded to the back face layer 40, during the manufacturing process for the retroreflective sheet 100. Thus, the retroreflective elements 24 and the back face layer 40 are bonded to each other via at least some of the plurality of particles 30. Furthermore, in a part of the capsule portions 46 according to the present embodiment, the partial bonding portions 44 are formed with a part of the retroreflective elements 24 and a part of the back face layer 40 bonded to each other.

The surface of each of the plurality of particles 30 is at least partially made of resin. Preferably, the surface of each of the particles 30 is entirely made of resin. Furthermore, the content rate of resin in the material forming each particle 30 is higher the better. Preferably, entirety of each of the particles 30 (not only the surface but also the inside thereof) is made of resin. Preferably, the resin forming the plurality of particles 30 is thermosetting resin. Specific examples of the resin forming the plurality of particles 30 include phenol resin, urea resin, melamine resin, epoxy resin, polyethylene resin, polyamide resin, polyester resin, butyral resin, polyvinyl acetate resin, polymethyl methacrylate resin, polyvinyl ether resin, polyurethane resin, polycarbonate resin, and cellulose derivative.

The particles 30 made of thermosetting resin are less likely to deform when the retroreflective sheet 100 is heated. For example, the retroreflective sheet 100 that is used for a car license plate may be heated to a high temperature by receiving heat reflected from asphalt or the like. Even in such a case, the deformation of the particles 30 is less likely to occur. When the plurality of particles 30 is made of thermosetting resin, at least some of the plurality of particles arranged in the capsule portions 46 may be in an uncured state.

Note that the resin forming the plurality of particles 30 is not limited to thermosetting resin, and may be thermoplastic resin. When the back face layer 40 is made of thermoplastic resin, the plurality of particles 30 may be also made of thermoplastic resin, so that that of the back face layer 40 and the plurality of particles 30 can be more firmly bonded to each other.

When the plurality of particles 30 is made of thermoplastic resin, the glass transition temperature of the thermoplastic resin is preferably lower than the glass transition temperature of the resin forming the back face layer 40. When the retroreflective layer 20 and the back face layer 40 are thermocompression-bonded to each other as described later, the plurality of particles 30 is more likely to be plasticized if the glass transition temperature of the thermoplastic resin forming the plurality of particles 30 is lower than the glass transition temperature of the resin forming the back face layer 40. As a result, bonding between the retroreflective layer 20 and the back face layer 40, via the plurality of particles 30, may be facilitated. Alternatively, the glass transition temperature of the thermoplastic resin forming the plurality of particles 30 may be higher than the glass transition temperature of the resin forming the back face layer 40. When the glass transition temperature of the thermoplastic resin forming the plurality of particles 30 is higher than the glass transition temperature of the resin forming the back face layer 40, the retroreflective layer 20 and the back face layer 40 are preferably thermocompression-bonded to each other at a temperature higher than the glass transition temperature of the thermoplastic resin forming the plurality of particles 30.

When the plurality of particles 30 is made of thermoplastic resin, the glass transition temperature of the thermoplastic resin is preferably higher than the temperature of the retroreflective sheet 100 during use. This may provide an effect of suppressing plasticization of the plurality of particles 30 while the retroreflective sheet 100 is being used.

The particles 30 may be colored. By coloring the particles 30, the brightness and saturation of the retroreflective sheet 100 can be improved. When the particles 30 are colored, the particles 30 are preferably colored with a color similar to a color of the back face layer 40. For example, when the back face layer 40 is colored white, the color of the particles 30 is preferably white or milky white. With the particles 30 thus having a color that is similar to the that of the back face layer 40, the difference between the color of the back face layer 40 and the color of the particles 30 is less likely to be noticeable in plan view, whereby uniformity of the appearance of the retroreflective sheet 100 can be improved.

The particles 30 are also preferably colorless and transparent. The particles 30 that are colorless and transparent are less noticeable regardless of the color of the back face layer 40, meaning that the appearance of the retroreflective sheet 100 can be improved.

Furthermore, the particles 30 may be hollow particles. The term "hollow particles" refers to particles with a cavity formed inside the outer shell. In addition, the inside of this cavity may be a vacuum or may be filled with gas.

The shape, the size, and the number of the particles 30 are not particularly limited as long as the voids 32 can be formed between the back face layer 40 and the retroreflective elements 24. Still, the plurality of particles 30 is preferably spherical.

The adhesive layer 50 is provided on the side of the back face layer 40 opposite to the side of the retroreflective layer 20, and serves as a layer that is attached to an adherend when the retroreflective sheet 100 is used.

The material forming the adhesive layer 50 can be appropriately selected from, for example, a pressure-sensitive adhesive, a heat-sensitive adhesive, a crosslinked adhesive, and the like. Examples of the pressure-sensitive adhesive include a polyacrylic acid ester pressure-sensitive adhesive obtained by copolymerizing acrylic acid ester such as butyl acrylate, 2-ethylhexyl acrylate, isooctyl acrylate, or nonyl acrylate with acrylic acid, vinyl acetate, or the like, a silicone-based resin pressure-sensitive adhesive, and a rubber-based pressure-sensitive adhesive. Examples of the heat-sensitive adhesive include acrylic resin, polyester resin, and epoxy resin. Acrylic resin or silicone resin is preferably used, so that the adhesive layer 50 can have excellent weatherability and adhesiveness.

The brightness and saturation of the retroreflective sheet 100 can be easily improved in accordance with how the retroreflective sheet 100 is to be used, by providing a certain pigment in the adhesive layer 50. For example, the brightness of the retroreflective sheet 100 can be improved by providing a white pigment such as titanium oxide in the adhesive layer 50.

The release layer 60 is a layer provided on the side of the adhesive layer 50 opposite to the side of the back face layer 40. By covering the adhesive layer 50 with the release layer 60 before the retroreflective sheet 100 is used, dust or the like is prevented from adhering to the adhesive layer 50 or the adhesive layer 50 is prevented from adhering to an unintended place. On the other hand, when the retroreflective sheet 100 is used, the release layer 60 is peeled from the adhesive layer 50.

Such a release layer 60 is made of, for example, a polyester film, a polypropylene film, or the like, but is not particularly limited thereto.

The retroreflective sheet 100 described above includes the retroreflective layer 20, the back face layer 40, the plurality of particles 30, and the voids 32. In the retroreflective sheet 100 according to the present embodiment, the plurality of particles 30 is fixed by being sandwiched by the retroreflective elements 24 and the back face layer 40. Furthermore, the voids 32 are formed between the back face layer 40 and the retroreflective elements 24, and a gas such as air is confined in the voids 32. Due to the refractive index difference between this gas and the retroreflective elements 24, the light incident from the retroreflective layer 20 side can be reflected to the retroreflective layer 20 side at an interface IF between the retroreflective elements 24 and the void 32 illustrated in FIG. 3. Furthermore, in the retroreflective sheet 100 according to the present embodiment, the voids 32 are supported by the plurality of particles 30 and thus can be prevented from being crushed even when pressure in the thickness direction is applied. Therefore, in the retroreflective sheet 100 according to the present embodiment, a decrease in the retroreflectivity can be less likely to be compromised even when pressure is applied in the thickness direction as described above.

Furthermore, in the retroreflective sheet 100 according to the present embodiment, at least a part of the surface of the back face layer 40 on the retroreflective elements 24 side is made of resin, and at least a part of the surface of the plurality of particles 30 is also made of resin. Thus, the back face layer 40 and the plurality of particles 30 can be firmly bonded to each other. Thus, the positions of the plurality of particles 30 can be prevented from being displaced.

Furthermore, in the retroreflective sheet 100 according to the present embodiment, the retroreflective elements 24 and the back face layer 40 are bonded to each other via at least some of the plurality of particles 30. With the retroreflective elements 24 and the back face layer 40 thus bonded to each other via the plurality of particles 30, the retroreflective elements 24 and the back face layer 40 can be firmly bonded to each other.

Furthermore, when the particles 30 are entirely made of resin, the back face layer 40 and the particles 30 can be more firmly bonded to each other. With the retroreflective elements 24 and the back face layer 40 thus bonded to each other via the particles 30, the retroreflective elements 24 and the back face layer 40 can be firmly bonded to each other.

Furthermore, the retroreflective sheet 100 according to the present embodiment has the bonding portion 42 where the retroreflective elements 24 and the back face layer 40 are bonded to each other. The bonding portion 42 is continuously formed to surround the plurality of capsule portions 46 in plan view. In the plurality of capsule portions 46, the voids 32 are formed. The bonding portion 42 continuously formed to surround the plurality of capsule portions 46 supports the voids when the pressure in the thickness direction is applied, whereby the voids 32 in the plurality of capsule portions 46 can be less likely to be crushed. Furthermore, in the retroreflective sheet 100 according to the present embodiment, the bonding portion 42 where the retroreflective elements 24 and the back face layer 40 are bonded to each other is continuously formed to surround the plurality of capsule portions, and thus can prevent water or foreign matter from entering the plurality of capsule portions 46 when the retroreflective sheet 100 is used in an environment (such as outdoors) exposed to water or foreign matter. Thus, in the capsule portions 46, the voids 32 formed between the retroreflective elements 24 and the plurality of particles 30 can be prevented from being filled with water or foreign matter. For this reason, the retroreflective sheet 100 according to the present embodiment can have improved reliability when used in an environment (such as outdoors) exposed to water or foreign matter.

Furthermore, in the retroreflective sheet 100 according to the present embodiment, the binder portions 45, made of the same material as the particles 30, are formed between the back face layer 40 and the retroreflective elements 24 in the bonding portion 42. When the back face layer 40 and the retroreflective layer 20 are thermocompression-bonded to each other, the plurality of particles 30 is interposed between the back face layer 40 and the retroreflective elements 24 and thus the plurality of particles 30 may melt to serve as the binder portions 45. Thus, with the binder portions 45 formed between the back face layer 40 and the retroreflective elements 24 in the bonding portion 42, increased bonding strength between the retroreflective elements 24 and the back face layer 40 can be achieved.

Furthermore, in the retroreflective sheet 100 according to the present embodiment, in the plurality of capsule portions 46, a part of the back face layer 40 and a part of the retroreflective elements 24 are bonded to each other. In plan view, the portions where the back face layer 40 and the retroreflective elements 24 are bonded to each other appear to be brighter than the portions where the voids 32 are formed between the back face layer 40 and the retroreflective elements 24. This results in a brightness difference between the portions where the back face layer 40 and the retroreflective elements 24 are bonded to each other and the portions where the voids 32 are formed between the back face layer 40 and the retroreflective elements 24. In view of this, the back face layer 40 and the retroreflective elements 24 are partially bonded to each other also in the capsule portions 46 surrounded by the bonding portion 42 as described above, whereby the brightness difference between the bonding portion 42 and the capsule portions 46 may be reduced. Thus, the uniformity of the appearance of the retroreflective sheet 100 can be improved. Furthermore, the bonding strength between the retroreflective elements 24 and the back face layer 40 can be increased by increasing bonding portions between the back face layer 40 and the retroreflective elements 24.

Furthermore, in the retroreflective sheet 100, the size, the shape, and the number of the plurality of particles 30 are adjusted for forming the voids 32 contributing to the retroreflection by the plurality of particles 30. Thus, the size and the distribution of the voids 32 can be easily adjusted over the entire retroreflective sheet 100. Specifically, in the retroreflective sheet 100, it is easy to increase the uniformity of the retroreflectivity to be close to complete uniformity over the entire retroreflective sheet 100, or to adjust the level of the retroreflectivity of the retroreflective sheet 100.

When an average particle diameter da of the plurality of particles 30 is equal to or larger than a height h of the retroreflective elements 24, formation of the voids 32 between the retroreflective elements 24 and the plurality of particles 30 is facilitated, whereby the retroreflectivity of the retroreflective sheet 100 can be easily increased. On the other hand, when the average particle diameter da of the plurality of particles 30 is smaller than the height h of the retroreflective elements 24, it becomes easy to increase the area of the bonding portion 42 between the retroreflective elements 24 and the back face layer 40, whereby the bonding strength between the retroreflective elements 24 and the back face layer 40 can be easily increased. When a ratio da/h of the average particle diameter da of the plurality of particles 30 to the height h of the retroreflective elements 24 is equal to or higher than 0.40 and equal to or lower than 1.25, the voids 32 with an appropriate size are formed between the retroreflective elements 24 and the plurality of particles 30, whereby the retroreflectivity of the retroreflective sheet 100 can be easily increased. At the same time, it becomes easy to increase the area of the bonding portion 42 between the retroreflective elements 24 and the back face layer 40, whereby the bonding strength between the retroreflective elements 24 and the back face layer 40 can be easily increased.

When a ratio np/nv of the number np of the plurality of particles 30 to the number nv of valleys 26 formed between the adjacent retroreflective elements 24 is equal to or larger than 0.50 and equal to or smaller than 5.00, the voids 32 with an appropriate size are formed between the retroreflective elements 24 and the plurality of particles 30, whereby the retroreflectivity of the retroreflective sheet 100 can be easily increased. Furthermore, with the ratio np/nv being equal to or larger than 0.50 and equal to or smaller than 5.00, it becomes easy to increase the area of the bonding portion 42 between the retroreflective elements 24 and the back face layer 40, whereby the bonding strength between the retroreflective elements 24 and the back face layer 40 can be easily increased. In view of these, the ratio np/nv is more preferably equal to or larger than 0.50 and equal to or smaller than 2.00.

When the plurality of particles 30 is spherical, it becomes easy to form the voids 32 with an appropriate size between the retroreflective elements 24 and the plurality of particles 30, whereby the retroreflectivity of the retroreflective sheet 100 can be easily increased.

Furthermore, when the particles 30 are hollow particles as described above, not only the voids 32 are formed between the retroreflective elements 24 and the plurality of particles 30 but also the particles 30 themselves have cavities with a lower refractive index than the retroreflective elements 24. Thus, the volume of the space having a lower refractive index than the retroreflective elements 24 can be increased between the retroreflective elements 24 and the back face layer 40. As a result, the retroreflectivity of the retroreflective sheet 100 can be further improved.

Furthermore, for the sake of efficient retroreflection at the retroreflective elements 24, the refractive index of the material forming the retroreflective elements 24 is preferably larger than the refractive index of the material forming the back face layer 40. When the refractive index of the material forming the retroreflective elements 24 is larger than the refractive index of the material forming the back face layer 40, light can be reflected also at the bonding portion 42. For the sake of achieving a similar effect, the refractive index of the plurality of particles 30 is preferably smaller than the refractive index of the retroreflective elements 24. When the refractive index of the particles 30 is smaller than the refractive index of the retroreflective elements 24, reflection of the light incident from the retroreflective elements 24 side toward the retroreflective elements 24 in the interface between the retroreflective elements 24 and the particles 30 is facilitated at the portions where the retroreflective elements 24 and the particles 30 are in contact with each other. Similarly, the refractive index of the binder portions 45 is preferably smaller than the refractive index of the retroreflective elements 24.

Next, a method for manufacturing the retroreflective sheet 100 according to the present embodiment will be described. FIG. 4 is a flowchart illustrating a method for manufacturing the retroreflective sheet 100 according to the present embodiment. The method for manufacturing the retroreflective sheet according to the present embodiment as illustrated in FIG. 4 includes: a stacking process P1; a pressure bonding process P2; an adhesive layer stacking process P3: a release layer stacking process P4; and a surface protective layer stacking process P5.

### <Stacking process P1>

This step is a step of stacking the retroreflective layer 20 and the back face layer 40 with the plurality of particles interposed therebetween. First of all, the back face layer 40 is prepared, and the plurality of particles 30 is dispersedly arranged on the surface of the back face layer 40 in a state where the back face layer 40 has viscosity. Then, the surface of the back face layer 40 on which the plurality of particles 30 is arranged is overlapped on the retroreflective layer 20. Alternatively, the plurality of particles 30 is dispersedly arranged on the surface of the retroreflective layer 20 on which the retroreflective elements 24 are formed, and then the back face layer 40 is overlapped on the surface.

### <Pressure bonding process P2>

This step is a step in which the retroreflective layer 20 and the back face layer 40 are thermocompression-bonded to each other so that the voids 32 are formed between the retroreflective elements 24 and the back face layer 40. Specifically, the retroreflective layer 20 is placed on a flat surface in a state where the retroreflective layer 20 and the back face layer 40 are overlapped with each other, and the back face layer 40 is pressed onto the retroreflective layer 20 under application of heat. As a result, the recesses 48 are formed in the back face layer 40, and the back face layer 40 and the retroreflective elements 24 are thermocompression-bonded to each other on the surface of the back face layer 40 opposite to the recesses 48. In this way, the bonding portion 42 is formed. In the present embodiment, the pressing of the back face layer 40 as described above is performed by using a grid-shaped pressing member, whereby the bonding portion 42 having a grid shape is formed as illustrated in FIG. 1. In addition, when the pressing as described above is performed, the back face layer 40 is somewhat pressed onto the retroreflective layer 20 also in portions to be the capsule portions 46. Thus, the partial bonding portions 44 are formed.

By performing the pressing from the back face layer 40 side to thermocompression-bond the retroreflective layer 20 and the back face layer 40 to each other as described above, deformation of the retroreflective layer 20 is less likely to occur, meaning that a negative impact on the retroreflectivity of the retroreflective sheet 100 may be reduced.

Furthermore, in the pressure bonding process P2 according to the present embodiment, the retroreflective elements 24 and the back face layer 40 are bonded to each other via at least some of the plurality of particles 30. With the retroreflective elements 24 and the back face layer 40 thus bonded to each other via the plurality of particles 30, the retroreflective elements 24 and the back face layer 40 can be firmly bonded to each other.

Furthermore, in the pressure bonding process P2 according to the present embodiment, the binder portions 45 made of the particles 30 are formed between the back face layer 40 and the retroreflective elements 24. The thermocompression bonding performed with the particles 30 interposed between the back face layer 40 and the retroreflective elements 24 results in melting of the particles 30 and thus forming of the binder portions 45 made of the particles 30 between the back face layer 40 and the retroreflective layer 20. Thus, with the binder portions 45 formed between the back face layer 40 and the retroreflective elements 24 in the bonding portion 42, increased bonding strength between the retroreflective elements 24 and the back face layer 40 can be achieved.

Furthermore, in the pressure bonding process P2 according to the present embodiment, in the plurality of capsule portions 46, a part of the back face layer 40 and a part of the retroreflective elements 24 are bonded to each other. As described above, by bonding a part of the back face layer 40 and a part of the retroreflective elements 24 to each other in the plurality of capsule portions 46, the brightness difference between the bonding portion 42 and the capsule portions 46 can be reduced as described above and also the bonding strength between the retroreflective elements 24 and the back face layer 40 can be increased.

### <Adhesive layer stacking process P3>

This step is a step of stacking the adhesive layer 50 on the surface of the back face layer 40 opposite to the retroreflective layer 20 side. Specifically, this step is a step of coating the surface of the back face layer 40 opposite to the retroreflective layer 20 side with an adhesive to serve as the adhesive layer 50.

### <Release layer stacking process P4>

This step is a step of stacking the release layer 60 on the surface of the adhesive layer 50 opposite to the back face layer 40 side. Specifically, this is a step of preparing a release film to serve as the release layer 60 and bonding the release film and the adhesive layer 50 together.

### <Surface protective layer stacking process P5>

This step is a step of stacking the surface protective layer 10 on the surface of the retroreflective layer 20 opposite to the back face layer 40 side. Specifically, this is a step of coating the surface of the retroreflective layer 20 opposite to the side on which the retroreflective elements 24 are formed, with resin to serve as the surface protective layer 10.

Note that the pressure bonding process P2 is performed after the stacking process P1, and the order of the other processes is not particularly limited. For example, the adhesive layer 50 may be stacked on the back face layer 40 after a stack including the adhesive layer 50 and the release layer 60 is made. Furthermore, the surface protective layer 10 may be stacked on the retroreflective layer 20 before the stacking process P1, or may be stacked on the retroreflective layer 20 after the other layers are stacked after the pressure bonding process P2.

The method of manufacturing the retroreflective sheet 100 described above includes the stacking process P1 and the pressure bonding process P2. With the method for manufacturing the retroreflective sheet 100 according to the present embodiment, the retroreflective sheet 100 is manufactured with the plurality of particles 30 sandwiched by the retroreflective elements 24 and the back face layer 40, and the voids 32 formed between the back face layer 40 and the retroreflective elements 24. Thus, the retroreflective sheet 100 is manufactured in which a decrease in the retroreflectivity can be less likely to be compromised even when pressure is applied in the thickness direction as described above. Furthermore, at least a part of the surface of the back face layer 40 on the retroreflective elements 24 side is made of resin, and at least a part of the surface of the plurality of particles 30 is also made of resin. Thus, the back face layer 40 and the plurality of particles 30 can be firmly bonded to each other in the pressure bonding process P2. Thus, the positions of the plurality of particles 30 can be prevented from being displaced.

Furthermore, in the method of manufacturing the retroreflective sheet 100 according to the present embodiment, when the particles 30 are entirely made of resin, the back face layer 40 and the particles 30 can be more firmly bonded in the pressure bonding process P2. Furthermore, with the retroreflective elements 24 and the back face layer 40 bonded to each other via the plurality of particles 30, the retroreflective elements 24 and the back face layer 40 can be firmly bonded to each other.

Furthermore, in the method for manufacturing the retroreflective sheet 100 according to the present embodiment, when the particles 30 are made of thermosetting resin, the particles 30 heated in the pressure bonding process P2 are cured, so that the strength can be increased. Therefore, in the retroreflective sheet 100, a decrease in retroreflectivity can be more suppressed even when pressure is applied in the thickness direction.

Although a preferred embodiment of the present invention is described above as an example, the present invention is not limited to this.

For example, in the above-described embodiment, an example is described in which the surface protective layer 10 is provided. However, the surface protective layer 10 is not an essential component.

Furthermore, in the above-described embodiment, an example is described in which the adhesive layer 50 is provided. However, the adhesive layer 50 is not an essential component. For example, when the back face layer 40 is made of an adhesive, the retroreflective sheet can be attached to an object even if the adhesive layer 50 is not provided. Thus, the retroreflective sheet can have a simple layer structure, and the production cost of the retroreflective sheet can be prevented from being high.

In the above-described embodiment, an example is described in which the bonding portion 42 is formed to have a gird shape in plan view. Specifically, in the configuration described as an example, the capsule portions 46 surrounded by the bonding portion 42 have a rectangular shape. However, the present invention is not limited to this configuration, and the shape of the capsule portions 46 surrounded by the bonding portion 42 in plan view may be any shape such as a circle, an ellipse, or a polygon other than a rectangle.

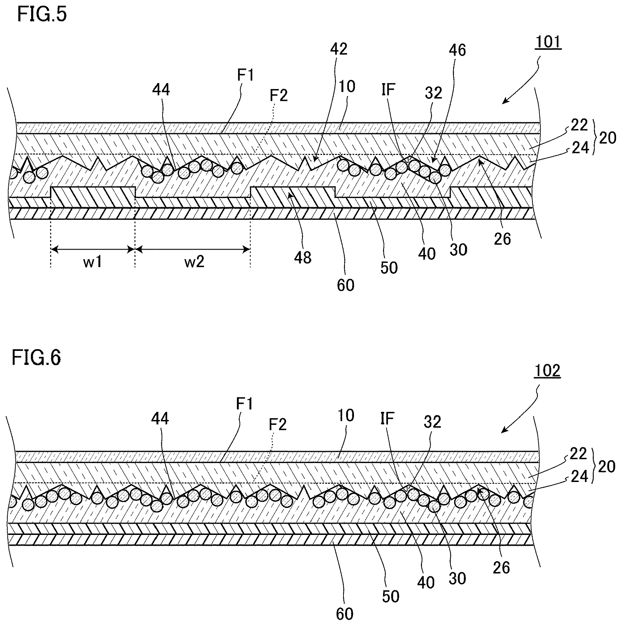

Furthermore, in the above-described embodiment, an example is described in which the binder portions 45 are formed in the bonding portion 42. However, the present invention is not limited to this configuration. FIG. 5 is a cross-sectional view of a retroreflective sheet according to a modification of the present invention as viewed in a direction that is same as that for FIG. 2. A retroreflective sheet 101 illustrated in FIG. 5 has no binder portions 45 formed in the bonding portion 42. In this case, in the stacking process P1, the retroreflective layer 20 and the back face layer 40 are stacked with no particles 30 disposed at a portion to serve as the bonding portion 42.

Furthermore, in the above-described embodiment, an example is described in which the bonding portion 42 is formed. However, the present invention is not limited to this configuration. FIG. 6 is a cross-sectional view of a retroreflective sheet according to another modification of the present invention as viewed in a direction that is same as that for FIG. 2. In a retroreflective sheet 102 illustrated in FIG. 6, the plurality of capsule portions 46 and the bonding portion 42 that are continuously formed to surround the capsule portions 46 are not formed. Such a retroreflective sheet 102 can be manufactured by pressing the entire back face layer 40 with heat applied in the pressure bonding process P2. In the retroreflective sheet 102, a part of the retroreflective elements 24 and a part of the back face layer 40 can be intermittently bonded to each other via the plurality of particles 30, as in the embodiment described above. Furthermore, in the retroreflective sheet 102, a part of the retroreflective elements 24 and a part of the back face layer 40 can be intermittently bonded to each other with the partial bonding portions 44 formed, as in the embodiment described above.

As described above, the present invention provides a retroreflective sheet in which a decrease in the retroreflectivity is less likely to be compromised even when the pressure in the thickness direction is applied, and a method of manufacturing the retroreflective sheet, and can be used for fields of car license plate, advertisement, and the like.

### Reference Signs List

- 10: surface protective layer
- 20: retroreflective layer
- 24: retroreflective elements
- 26: valley
- 30: particle
- 32: void
- 40: back face layer
- 42: bonding portion
- 44: partial bonding portion
- 46: capsule portion
- 50: adhesive layer
- 60: release layer
- 100, 101, 102: retroreflective sheet
- P1: stacking process
- P2: pressure bonding process
- P3: adhesive layer stacking process
- P4: release layer stacking process
- P5: surface protective layer stacking process

## Claims

1. A retroreflective sheet (100) comprising:
a retroreflective layer (20) including a plurality of retroreflective elements (24) on one surface;
a back face layer (40) provided to face the retroreflective elements (24) and having a surface on a retroreflective elements side at least a part of which is made of resin;
**characterized in that** the retroreflective sheet (100) comprising further:
a plurality of particles (30) disposed between the retroreflective elements (24) and the back face layer (40) and having a surface at least a part of which is made of resin; and
voids (32) formed between the retroreflective elements (24) and the back face layer (40), wherein the voids (32) are supported by the plurality of particles (30).

2. The retroreflective sheet according to claim 1, wherein
the retroreflective elements (24) and the back face layer (40) are bonded to each other via at least some of the plurality of particles (30).

3. The retroreflective sheet according to claim 1 or 2, wherein
the particles (30) are made of resin.

4. The retroreflective sheet according to any one of claims 1 to 3, wherein
the particles (30) are made of thermosetting resin.

5. The retroreflective sheet according to any one of claims 1 to 4, comprising:
a bonding portion (42) where the retroreflective elements (24) and the back face layer (40) are bonded to each other, wherein
the bonding portion (42) is continuously formed to surround a plurality of capsule portions (46) in plan view, and
the voids (32) are formed in the plurality of capsule portions.

6. The retroreflective sheet according to claim 5, wherein
binder portions (45) made of a same material as the particles (30) are formed between the back face layer and the retroreflective elements in the bonding portion.

7. The retroreflective sheet according to claim 5 or 6, wherein
in the plurality of capsule portions, a part of the back face layer and a part of the retroreflective elements (24) are bonded to each other.

8. The retroreflective sheet according to any one of claims 1 to 7, wherein
a refractive index of the particles (30) is smaller than a refractive index of the retroreflective elements (24) .

9. A method for manufacturing a retroreflective sheet, the method comprising:
a stacking process of stacking a retroreflective layer including a plurality of retroreflective elements (24) on one surface and a back face layer (40) provided to face the retroreflective elements (24)
**characterized in that** the method comprising further:
having a surface on a retroreflective elements side at least a part of which is made of resin with a plurality of particles (30) having a surface at least a part of which is made of resin interposed therebetween; and
a pressure bonding process of thermocompression-bonding the retroreflective layer (20) and the back face layer (40) so that voids (32) are formed between the retroreflective elements (24) and the back face layer (40), wherein the voids (32) are supported by the plurality of particles (30).

10. The method for manufacturing a retroreflective sheet according to claim 9, wherein
in the pressure bonding process, the retroreflective elements (24) and the back face layer (40) are bonded to each other via at least some of the plurality of particles (30) .

11. The method for manufacturing a retroreflective sheet according to claim 10, wherein
the particles (30) are entirely made of resin.

12. The method for manufacturing a retroreflective sheet according to any one of claims 9 to 11, wherein
the particles (30) are made of thermosetting resin.

13. The method for manufacturing a retroreflective sheet according to any one of claims 9 to 12, wherein
in the pressure bonding process, a bonding portion (42) where the retroreflective elements (24) and the back face layer (40) are bonded to each other is formed,
the bonding portion (42) is continuously formed to surround a plurality of capsule portions (46) in plan view, and
the voids (32) are formed in the plurality of capsule portions (46).

14. The method for manufacturing a retroreflective sheet according to claim 13, wherein
in the pressure bonding process, binder portions (45) made of the particles (30) are formed between the back face layer (40) and the retroreflective elements (24).

15. The method for manufacturing a retroreflective sheet according to claim 13 or 14, wherein
in the pressure bonding process, a part of the back face layer (40) in the plurality of capsule portions (46) and a part of the retroreflective elements (24) are bonded to each other.

## Patentansprüche

1. Rückstrahlfolie (100), umfassend:
eine Rückstrahlschicht (20), die eine Vielzahl von Rückstrahlelementen (24) auf einer Oberfläche einschließt;
eine Rückflächenschicht (40), die bereitgestellt ist, um den Rückstrahlelementen (24) zugewandt zu sein, und eine Oberfläche an einer Seite von Rückstrahlelementen aufweist, von der mindestens ein Teil aus Harz hergestellt ist;
**dadurch gekennzeichnet, dass** die Rückstrahlfolie (100) weiter umfasst:
eine Vielzahl von Partikeln (30), die zwischen den Rückstrahlelementen (24) und der Rückflächenschicht (40) angeordnet sind und eine Oberfläche aufweisen, von der mindestens ein Teil aus Harz hergestellt ist; und
Leerräume (32), die zwischen den Rückstrahlelementen (24) und der Rückflächenschicht (40) gebildet sind, wobei die Leerräume (32) durch die Vielzahl von Partikeln (30) getragen werden.

2. Rückstrahlfolie nach Anspruch 1, wobei
die Rückstrahlelemente (24) und die Rückflächenschicht (40) über mindestens einige der Vielzahl von Partikeln (30) aneinandergebunden sind.

3. Rückstrahlfolie nach Anspruch 1 oder 2, wobei
die Partikel (30) aus Harz hergestellt sind.

4. Rückstrahlfolie nach einem der Ansprüche 1 bis 3, wobei
die Partikel (30) aus wärmehärtendem Harz hergestellt sind.

5. Rückstrahlfolie nach einem der Ansprüche 1 bis 4, umfassend:
einen Bindungsabschnitt (42), in dem die Rückstrahlelemente (24) und die Rückflächenschicht (40) aneinandergebunden sind, wobei
der Bindungsabschnitt (42) durchgängig gebildet ist, um eine Vielzahl von Kapselabschnitten (46) in der Draufsicht zu umgeben, und
wobei die Leerräume (32) in der Vielzahl von Kapselabschnitten gebildet sind.

6. Rückstrahlfolie nach Anspruch 5, wobei
Binderabschnitte (45), die aus einem gleichen Material wie die Partikel (30) hergestellt sind, zwischen der Rückflächenschicht und den Rückstrahlelementen in dem Bindungsabschnitt gebildet sind.

7. Rückstrahlfolie nach Anspruch 5 oder 6, wobei
in der Vielzahl von Kapselabschnitten ein Teil der Rückflächenschicht und ein Teil der Rückstrahlelemente (24) aneinandergebunden sind.

8. Rückstrahlfolie nach einem der Ansprüche 1 bis 7, wobei
ein Brechungsindex der Partikel (30) kleiner als ein Brechungsindex der Rückstrahlelemente (24) ist.

9. Verfahren zur Herstellung einer Rückstrahlfolie, das Verfahren umfassend:
einen Stapelungsprozess des Stapelns einer Rückstrahlschicht, die eine Vielzahl von Rückstrahlelementen (24) auf einer Oberfläche einschließt, und einer Rückflächenschicht (40), die bereitgestellt ist, um den Rückstrahlelementen (24) zugewandt zu sein,
**dadurch gekennzeichnet, dass** das Verfahren weiter umfasst:
Aufweisen einer Oberfläche auf einer Seite von Rückstrahlelementen, von der mindestens ein Teil aus Harz hergestellt ist, mit einer dazwischen angeordneten Vielzahl von Partikeln (30), die eine Oberfläche aufweisen, von der mindestens ein Teil aus Harz hergestellt ist; und
einen Druckverbindungsprozess des Verbindens der Rückstrahlschicht (20) und der Rückflächenschicht (40) durch Wärmekompression, sodass Leerräume (32) zwischen den Rückstrahlelementen (24) und der Rückflächenschicht (40) gebildet werden, wobei die Leerräume (32) durch die Vielzahl von Partikeln (30) getragen werden.

10. Verfahren zur Herstellung einer Rückstrahlfolie nach Anspruch 9, wobei
in dem Druckverbindungsprozess die Rückstrahlelemente (24) und die Rückflächenschicht (40) über mindestens einige der Vielzahl von Partikeln (30) aneinandergebunden sind.

11. Verfahren zur Herstellung einer Rückstrahlfolie nach Anspruch 10, wobei
die Partikel (30) vollständig aus Harz hergestellt sind.

12. Verfahren zur Herstellung einer Rückstrahlfolie nach einem der Ansprüche 9 bis 11, wobei
die Partikel (30) aus wärmehärtendem Harz hergestellt sind.

13. Verfahren zur Herstellung einer Rückstrahlfolie nach einem der Ansprüche 9 bis 12, wobei
in dem Druckverbindungsprozess ein Bindungsabschnitt (42), in dem die Rückstrahlelemente (24) und die Rückflächenschicht (40) aneinandergebunden sind, gebildet wird,
der Bindungsabschnitt (42) durchgängig gebildet ist, um eine Vielzahl von Kapselabschnitten (46) in der Draufsicht zu umgeben, und
die Leerräume (32) in der Vielzahl von Kapselabschnitten (46) gebildet sind.

14. Verfahren zur Herstellung einer Rückstrahlfolie nach Anspruch 13, wobei
in dem Druckverbindungsprozess Binderabschnitte (45), die aus den Partikeln (30) hergestellt sind, zwischen der Rückflächenschicht (40) und den Rückstrahlelementen (24) gebildet werden.

15. Verfahren zur Herstellung einer Rückstrahlfolie nach Anspruch 13 oder 14, wobei
in dem Druckverbindungsprozess ein Teil der Rückflächenschicht (40) in der Vielzahl von Kapselabschnitten (46) und ein Teil der Rückstrahlelemente (24) aneinandergebunden werden.

## Revendications

1. Feuille rétroréfléchissante (100) comprenant :
une couche rétroréfléchissante (20) comportant une pluralité d'éléments rétroréfléchissants (24) sur une surface ;
une couche de face arrière (40) disposée pour faire face aux éléments rétroréfléchissants (24) et présentant une surface sur un côté éléments rétroréfléchissants dont au moins une partie est faite de résine ;
**caractérisée en ce que** la feuille rétroréfléchissante (100) comprend en outre :
une pluralité de particules (30) disposées entre les éléments rétroréfléchissants (24) et la couche de face arrière (40) et présentant une surface dont au moins une partie est faite de résine ; et
des vides (32) formés entre les éléments rétroréfléchissants (24) et la couche de face arrière (40), dans laquelle les vides (32) sont supportés par la pluralité de particules (30).

2. Feuille rétroréfléchissante selon la revendication 1, dans laquelle
les éléments rétroréfléchissants (24) et la couche de face arrière (40) sont liés entre eux par l'intermédiaire d'au moins certaines des particules de la pluralité de particules (30).

3. Feuille rétroréfléchissante selon la revendication 1 ou la revendication 2, dans laquelle
les particules (30) sont faites de résine.

4. Feuille rétroréfléchissante selon l'une quelconque des revendications 1 à 3, dans laquelle
les particules (30) sont faites de résine thermodurcissable.

5. Feuille rétroréfléchissante selon l'une quelconque des revendications 1 à 4, comprenant :
une portion de liaison (42) où les éléments rétroréfléchissants (24) et la couche de face arrière (40) sont liés entre eux, dans laquelle
la portion de liaison (42) est formée de manière continue de façon à entourer une pluralité de portions capsules (46) dans une vue en plan, et
les vides (32) sont formés dans la pluralité de portions capsules.

6. Feuille rétroréfléchissante selon la revendication 5, dans laquelle
des portions de liant (45) faites d'un même matériau que les particules (30) sont formées entre la couche de face arrière et les éléments rétroréfléchissants dans la portion de liaison.

7. Feuille rétroréfléchissante selon la revendication 5 ou la revendication 6, dans laquelle
dans la pluralité de portions capsules, une partie de la couche de face arrière et une partie des éléments rétroréfléchissants (24) sont liées l'une à l'autre.

8. Feuille rétroréfléchissante selon l'une quelconque des revendications 1 à 7, dans laquelle
un indice de réfraction des particules (30) est inférieur à un indice de réfraction des éléments rétroréfléchissants (24).

9. Procédé de fabrication d'une feuille rétroréfléchissante, le procédé comprenant :
un processus d'empilement consistant à empiler une couche rétroréfléchissante comportant une pluralité d'éléments rétroréfléchissants (24) sur une surface et une couche de face arrière (40) disposée pour faire face aux éléments rétroréfléchissants (24)
**caractérisé en ce que** le procédé comprend en outre :
le fait de présenter une surface sur un côté éléments rétroréfléchissants dont au moins une partie est faite de résine avec une pluralité de particules (30), les particules ayant une surface dont au moins une partie est faite de résine interposée entre elles ; et
un processus de liaison par pression consistant à lier par thermocompression la couche rétroréfléchissante (20) et la couche de face arrière (40) de telle sorte que des vides (32) soient formés entre les éléments rétroréfléchissants (24) et la couche de face arrière (40), dans lequel les vides (32) sont supportés par la pluralité de particules (30).

10. Procédé de fabrication d'une feuille rétroréfléchissante selon la revendication 9, dans lequel
dans le processus de liaison par pression, les éléments rétroréfléchissants (24) et la couche de face arrière (40) sont liés entre eux par l'intermédiaire d'au moins certaines particules de la pluralité de particules (30).

11. Procédé de fabrication d'une feuille rétroréfléchissante selon la revendication 10, dans lequel
les particules (30) sont entièrement faites de résine.

12. Procédé de fabrication d'une feuille rétroréfléchissante selon l'une quelconque des revendications 9 à 11, dans lequel
les particules (30) sont faites de résine thermodurcissable.

13. Procédé de fabrication d'une feuille rétroréfléchissante selon l'une quelconque des revendications 9 à 12, dans lequel
dans le processus de liaison par pression, une portion de liaison (42) où les éléments rétroréfléchissants (24) et la couche de face arrière (40) sont liés entre eux est formée,
la portion de liaison (42) est formée de manière continue de façon à entourer une pluralité de portions capsules (46) dans une vue en plan, et
les vides (32) sont formés dans la pluralité de portions capsules (46).

14. Procédé de fabrication d'une feuille rétroréfléchissante selon la revendication 13, dans lequel
dans le processus de liaison par pression, des portions de liant (45) faites des particules (30) sont formées entre la couche de face arrière (40) et les éléments rétroréfléchissants (24).

15. Procédé de fabrication d'une feuille rétroréfléchissante selon la revendication 13 ou la revendication 14, dans lequel
dans le processus de liaison par pression, une partie de la couche de face arrière (40) dans la pluralité de portions capsules (46) et une partie des éléments rétroréfléchissants (24) sont liées l'une à l'autre.
